# EUROPEAN PATENT APPLICATION

(11) **EP 4 790 270 A1**
(43) Date of publication of application: **12.08.2026**
(21) Application number: 25156572.7
(22) Date of filing: 07.02.2025
(51) Int. Cl.: F16C 41/04, B63H 21/17, B63H 23/24, F03D 13/40, B63B 35/00

(54) **ARRANGEMENT FOR TREATING A PLURALITY OF BEARING SYSTEMS DURING TRANSPORT AND/OR STORAGE, AND ASSOCIATED METHODS**

(71) Applicant: Siemens Gamesa Renewable Energy A/S, 7330 Brande (DK)
(72) Inventor: PETERSEN, Jesper Elliot, 6870 Oelgod (DK); RASMUSSEN, Soren, 5230 Odense (DK)
(74) Representative: SGRE-Association

(57) **Abstract**

An arrangement (1) and associated methods (400), for treating bearing systems during storage and/or transport, the arrangement (1) comprising two or more drive trains (2) or groups (10, 11) of drive trains (2), wherein each drive train (2) includes a generator (6), a rotatable element/s, a bearing system supporting the rotatable element/s, and a means for transmitting torque to the rotatable element/s upon receiving a power signal (8), the arrangement (1) comprising a power management system (3) that controls the power signal to the a means for transmitting torque, ensuring that each drive train or group of drive trains has at least one active rotation interval that is distinct from the rotation intervals of other drive trains or groups.

## Description

### FIELD

The present disclosure generally relates to the field of treating bearing systems during long periods of standstill, such as during transport and/or storage. More in particular, the present disclosure relates to an arrangement and associated methods for rotating one or more rotatable elements, such as a shaft or a rotor, of multiple drive trains being transported or stored.

### BACKGROUND

A wind turbine comprises various movable components that require support from one or more bearings to function properly. In particular, the drive train of a wind turbine includes a rotor, to which multiple rotor blades are attached, and the rotor is coupled to an electric generator. The rotor is typically supported by a main rotor bearing, which is located between the hub (where the blades are connected) and the generator. Generally, the drive train comprises several bearing portions, with each bearing system potentially consisting of multiple bearing portions supporting different components of the drive train.

The drive train may or may not include a gearbox. If present, the gearbox is typically connected to a primary rotor and, at the output section, to a secondary rotor that is linked to the generator.

Once a wind turbine is assembled, or even partially assembled, the bearings within the drive train are subjected to loads that place pressure on the contact points within the bearings. These loads arise from various factors, such as the weight of the components being supported and the geometrical constraints imposed by the assembly process as different parts are fastened together. The contact points within the bearings, such as the rollers and raceways in a roller bearing design or the balls and raceways in a ball bearing design, experience higher pressure when the bearings are part of an assembled system compared to when they are unmounted.

This pressure increases the risk of damage to the bearings during storage and transport due to small vibrations from environmental factors (e.g., wind or ground movement) or transportation activity.

When small vibrations occur, the contact points within the bearings may shift slightly through the thin layer of lubricant (such as grease) that separates the metal surfaces. These vibrations can lead to a type of damage known as "false brinelling" or "stand-still marks" caused by the relative oscillating motion of the metal surfaces under pressure. This damage significantly reduces the bearing's lifespan, necessitating early replacement and thus increasing operational costs for wind turbine operators.

This problem can occur in wind turbines with multiple bearings or even with just a single generator bearing, such as the rotor main bearing. In turbines with gearboxes, a similar damage mechanism can affect the gear teeth, where stand-still marks may form and cause failure due to the same vibrations experienced during storage or transport.

To address this issue, various solutions have been proposed, such as using auxiliary devices to rotate the movable parts of the drive trains. These devices include turning gears, rollers, or motors to rotate the rotor of a generator. Another approach involves rotating the high-speed shaft of the gearbox with chains or belts, while the generator may be even disengaged during transport or storage. Additionally, some solutions use the generator itself operating in motor mode to rotate the drive train components.

However, controlling the rotation requires auxiliary systems such as frequency converters for each drive train to rotate the generator at speeds which are much lower than in normal operation.

Therefore, these auxiliary converters may be different from the converters needed during normal operation. Designing these auxiliary power systems for each drive train is complex and costly, making known solution less attractive for implementation.

Furthermore, during storage and transport, the energy supply is often limited. Even if each drive train has its own dedicated auxiliary system, the required instantaneous power needed for rotation of all drive trains being transported may be substantial. This creates high power demands, requiring large transformers to handle the voltage and rotate the rotating components of all the drive trains being transported or stored, resulting in significant infrastructure costs.

This is a further drawback adding costs and complexity which make difficult an effective implementation of known solutions to prevent standstill marks of drive trains during transport and/or storage.

### SUMMARY

It is therefore an object of the disclosure to overcome the problems described above. The object is achieved by the independent claims. The dependent claims describe advantageous developments and modifications of the invention.

In a first aspect, the present disclosure is related to an arrangement for treating a plurality of bearing systems during storage and/or transport, the arrangement comprising:
a two or more drive trains, each drive train comprising:
   - a generator,
   - a rotatable element/s,
   - a bearing system configured to support the rotatable element/s,
   - a means for transmitting torque to rotate the rotatable element/s upon receiving a power signal (e.g. the generator itself).
a power management unit at least including one or more auxiliary converters, wherein the one or more auxiliary converters is configured to:
   o receive electrical power from a power supply, and
   o provide the power signal to the means for transmitting torque.

According to a definition of the present disclosure, the rotatable element/s of the drive train may be defined as at least one component of the drive, supported at least partially by the bearing system, which is allowed to rotate when a torque is applied. In contrast, static components are fixedly attached and do not rotate.

For example, a rotatable element/s of the drive train may include the rotor connected to the hub and the electrical generator, the main shaft, and/or the high-speed output shaft of the gearbox.

In some embodiments, the rotatable element/s is a rotor of the drive train, in particular the rotor of the generator.

In some embodiments, the rotatable element/s is a shaft separate from the generator, for example the main shaft, or the high-speed shaft subsequent of the gearbox.

The bearing system may comprise one or more of the following:
- a primary and/or secondary rotor main bearing,
- a gearbox bearing,
- a generator bearing.

The drive trains may be wind turbine drive trains. Wind turbine drive train may comprise portions of the hub at which plural rotor blades may be connected, may comprise the rotor, which is connected to the hub, may comprise the generator and optionally also a gearbox installed between the hub and the generator.

The bearing system of a wind turbine drive train may be adapted to support components of the wind turbine drive train, in particular to rotatably support rotatable element/s or components of the drive train relative to static components. The bearing system may for example comprise a rotor main bearing, i.e. a bearing which rotatably supports the rotor which is connected to the hub and to the generator. The rotor main bearing may for example be arranged between the hub and the generator. In case the drive train comprises a gearbox, a primary rotor which is connected to the hub needs to be supported by a bearing portion as well as a secondary rotor connected to an output section of the gearbox (and to the generator) needs to be rotatably supported by a bearing portion. Furthermore, the gearbox itself may comprise several gearbox bearing portions and also gear wheels comprising lubricant.

Furthermore, the bearing system may comprise a generator bearing, thus a bearing which rotatably supports a generator rotor relative to a generator stator. An individual generator bearing may in particular be present if the wind turbine drive train comprises a gearbox. In case of a direct drive wind turbine (in which no gearbox is present), the generator bearing may correspond to the rotor main bearing. Other configurations may be possible. The bearing system may comprise one or more further bearing portions.

The bearing system may comprise all bearing portions which rotatably support components which rotate due to the rotation of the main rotor. The bearing system may, during storage and/or transport, be at risk to be damaged when in standing still (not rotating) for a long period of time.

Thus, the rotatable element/s of the drive train may vary depending on the configuration or design concept of the wind turbine drive train.

The means for transmitting torque may be a rotary drive system within the context of this disclosure and may be interpreted as any means suitable for transmitting a torque for rotating the rotatable component, upon receiving a power signal.

In other words, the means for transmitting torque may comprise a separate motor (e.g., an electric motor), the generator itself operating in motor mode, or any other torque-imparting device coupled to the rotatable element/s.

As used herein, the term "rotary drive system" or "means for transmitting torque" should be interpreted broadly to encompass any element/s or mechanism that can rotate the drive train's rotatable element/s upon receiving a power signal from an auxiliary converter.

Therefore, the means for transmitting torque may be the generator of the drive train itself (e.g. a wind turbine electrical generator) operating in motor mode.

The term 'power signal' as used herein may refer broadly to the electrical output from a power supply device, including the voltage, current, and/or frequency characteristics necessary to for the means to transmitting torque to rotate the rotatable component/s of the drive train.

In may also be interpreted as a driving power stream to deliver a driving torque, for example, for the generator operating in a motor mode.

The power signal may be a driving power stream to deliver a driving torque, for example, from the generator operating in motor mode.

In other words, the expression "a means for transmitting torque" may be used interchangeably with "rotary drive train system" within the context of this specification. Such a means for transmitting torque (or rotary drive system) may comprise one or more of the following, in any combination:
- a generator configured to temporary operate as ab electric motor,
- a separate motor, a hydraulic actuator, or an auxiliary device employing chains, belts, and/or turning gears.

In some embodiments, the means for transmitting torque of each drive train is integral with the generator and/or is the generator itself, when operated in a motor mode.

The term "power management system" as used herein may refer broadly to an auxiliary converter (e.g. a frequency converter), optionally with a specific control unit or control module configured for controlling the power signal as aforementioned within different drive train or group of drive trains.

In an embodiment, the power management system may be configured to orchestrate the delivery of the power signals to the two or more drive trains.

In an example, the power management system may be configured to control the delivery of the power signal to the a means for transmitting torque in at least partially distinct time intervals, such that each drive of the two or more train, has at least one active rotation interval that differ from the active rotation interval(s) of the other drive train.

According to a definition of the present specification, an active rotation interval refers to a period of time during which a particular drive train (e.g., the a means for transmitting torque the rotatable element/s) is actively powered and rotating the rotatable component (e.g. shaft and/or rotor). In other words, it is the time window during which that drive train is actually being driven.

It may not be interpreted in such a way that the entire rotation intervals can never overlap. Rather, each drive train has at least one time segment that is not completely coextensive with every other drive train's active rotation window.

In an example, the power management system is configured to control the power supply such that the rotary drive system of each drive train receive power in a sequential manner at different time intervals, enabling rotation of the rotatable component at staggered and/or different intervals. Therefore, in some embodiments, there may not be an overlap over the entered rotation intervals, but a completely sequential control.

In an example, the power management system may be configured so that each and every individual drive train has at least one active rotation interval that differs from the active rotation intervals of the other drive trains.

The arrangement of this disclosure may reduce power consumption, peak power needed, and/or optimizes transformer size, being particularly important in transport vehicles and/or vessels, or at storage facilities typically located in remote places with limited available power.

In some embodiments, the a means for transmitting torque of each drive train, receive the power signal in a sequential manner, thereby rotating the rotatable element/s of the drive trains at different time intervals.

In an example, the two or more drive trains share a one auxiliary converter such that said only one auxiliary converter is configured to provide the power signal to the means for transmitting torque of the two or more drive trains. In this, a single auxiliary converter may be utilized for the two or more drive trains, in particular to more than three, four, or five drive trains, simplifying the equipment needed.

In an example, the a means for transmitting torque is the generator of each drive trains operating in a motor mode, receiving the power signal from the an auxiliary converter (e.g the one shared auxiliary converter), to transmit a driving torque.

Thus, the power management system may orchestrate (e.g. Control/distribute) the power supply such that each generator delivers a driving torque, causing the rotors of the drive trains to rotate. This allows the generator to function as a motor, enabling the system to utilize existing components efficiently while maintaining simplicity.

In an embodiment, the electrical generators may be of the type of a single winding set generator or a multiple winding set generator. When the generators are of the type of a multiple winding set generator, the auxiliary converter may be connected to only one winding set.

In some embodiments, the generator may be of various types, including a permanent magnet synchronous generator, particularly one with an outer rotor featuring multiple permanent magnets, or an induction generator.

In some embodiments, the two or more drive trains may be arranged or sub-divided in groups. For example, the arrangement comprising two or more groups of drive trains, each group comprising at least one drive train, wherein the two or more drive trains are sub-divided in a common group, each group having a different auxiliary converter shared among the drive trains of said group, wherein the power management system is configured to orchestrate the power signal among the two or more groups. Therefore, a single auxiliary converter per group may be utilized, which simplifies the equipment as it reduces the need for a single auxiliary converter per generator, this is, per drive train. Thus, an auxiliary converter per group may be used.

This grouping functionality may help further optimize power delivery and simplify control, particularly when dealing with a plurality of wind turbines, for example, in a vessel for transporting the drive trains offshore.

In other words, depending on the context, it may be advantageous to divide the total drive trains being transported or stored, into two, three four groups, or more groups, and sequentially rotate the rotatory elements of each group by means of the auxiliary converter, e.g. first, rotate group one, then group two, etc.

Therefore, in some embodiments, a single auxiliary converter may be utilized for each group, reducing equipment needs for transport and/ storage. E.g. if nine drive trains are transported and subdivided in three groups, only three auxiliary converters are needed, instead of one per drive train. Thus, making possible to control the instant rotation of each group, e.g. supplying a power signal at different time intervals, further reducing greatly power demand and transformer/s size.

In an embodiment, drive trains are organized into two or more groups, where each group (as a whole) is provided with an active rotation interval distinct from the intervals assigned to the other groups.

In a further example, the power management system may be configured to orchestrate the power signal so that each group of drive trains has at least one group-level active rotation interval that is at least partially distinct from the group-level active rotation interval(s) of the other groups.

In other words, the power management system may be configured to control the delivery of the power signal to the a means for transmitting torque in at least partially distinct time intervals, such that each drive train and/or a group of drive trains, has at least one active rotation interval that differ from the active rotation interval(s) of the other drive train and/or other group of drive trains.

This grouping arrangement can be desirable for logistical or power distribution reasons, allowing some drive trains to rotate together while still preserving an overall scheduling plan that prevents continuous simultaneous activation of all drive trains at once. In addition, this has the synergistic effect that it makes possible the use of a shared (single) auxiliary converter per group, or for all groups (all drive trains).

In an example, when drive trains are organized into groups, and the auxiliary converter is designed to be shared for each groups, the power management system may orchestrate a power signal delivered to each group by electrically switching -for example, via a contactor, switching relay, or bus arrangement-between different drive trains (or drive train groups), ensuring that each drive train receives power for an active rotation interval at a designated time.

In some embodiments, within a given group, the power management system is configured such that all generators are controlled to perform a rotation simultaneously. The power management system, for example utilizing a control unit, sequentially switches the auxiliary converter to manage the power stream for a different group, enabling efficient and controlled operation across multiple groups.

The power management system may sequentially or cyclically control a power signal in at least partially distinct time intervals, ensuring each drive train (or group of drive trains) has at least one active rotation interval distinct from the other drive trains/groups.

In an example, the power management system may control the power supply such that the rotatable element/s of each group receive power sequentially, depending on the specific group.

Although the examples described illustrate specific scheduling patterns (sequential, cyclical, periodic, random final positions, etc.), the solutions herein disclosed are not limited to these exact sequences. Any rotation scheme that ensures distinct (or partially distinct) intervals for the drive trains or groups of drive trains falls within the scope of this disclosure.

This power management system allows for a controlled rotation, which allows to not only reduces the power demand, and the transformer size, but allows the use of a single/shared auxiliary converter for all the drive trains and/or all/each group of drive trains being transported or stored, thus reducing complexity and costs of equipment.

To control the delivery of the power signal, for example, a scheduling control may be executed by the auxiliary converter and/or by a control unit independent or integrated within the auxiliary converter.

Alternatively, or in combination, switching means may be utilized. Thus, in some embodiments, the power management system may further comprise a switching system.

In some embodiments, the arrangement may include a switching system with a plurality of switching elements (e.g. a contactor, switching relay, or bus arrangement), each associated with a single drive train or with a group of drive trains.

The switching system permits independent power supply to each drive train or group, offering additional flexibility and precision. The switching system may be controlled by the power management system, and more specifically, by a control unit of the power management system.

In some embodiments, the orchestrating, can be accomplished by sequentially switching power from one drive train to another based on a time-based schedule, a control algorithm, or real-time sensor data, thereby avoiding concurrency and ensuring that each drive train experiences some unique portion of rotational activity.

In some embodiments, the arrangement may include a transformer connected to the power management system, which is configured to step up voltage from approximately 400V to 690V or step-down voltage from approximately 10,000V to 690V or 400V. This transformer may considerable reduce its size because of the arrangement disclosed in any of the previous examples.

As mentioned, the power management system, may include a shared (e.g. a single) auxiliary converter (for all drive trains or for each group) and, optionally, one or more control unit or a control module for controlling the power signal to multiple drive trains or multiple groups of drive train.

The auxiliary converter can be a power electronics module configured to supply a driving power stream of appropriate voltage, current, and/or frequency to the drive train's or group of drive train means for transmitting torque.

The control unit may be integrated or separate (e.g. in communication with) from the auxiliary converter and may orchestrate the flow of power among multiple drive trains (or groups of drive trains) in a manner that ensures at least partially distinct active rotation intervals.

In an example, this control unit may manage a sequential power supply to ensure precise timing and coordination of drive train rotations. In particular, the control unit may also vary the stop position of the rotatable element/s of each drive train or group of drive trains by implementing a random function algorithm.

In practice, the control unit may be implemented via dedicated electronic hardware, software running on a programmable microcontroller, or a combination of both. The system may incorporate sensors to measure shaft position, rotation speed, or temperature, and can adjust the power signal from the auxiliary converter accordingly. Further, remote connectivity (e.g., network-based control or cloud analytics) can optionally be used to monitor or change rotation scheduling parameters over time.

In an example, the control unit of the power management system may be integrated with or in communication with the main control system (the cone already configured for operating the wind turbine) of a wind turbine associated with the one of the drive trains being transported or stored. This integration enables the main control system of one turbine to act as a master controller, streamlining operation and reducing the need for additional control hardware.

In an example, the power management system comprises a single auxiliary converter (e.g. frequency converter) configured to switch or schedule its output among the drive trains or groups of drive trains, thereby sequentially or partially concurrently powering each drive train.

In an example, one advantageous approach is to operate the power management system in a cyclical or periodic manner, whereby each drive train (or group of drive trains) receives power signal in a recurring pattern at least partially at different rotation intervals. For instance, the control unit can sequence through drive trains A, B, C, then return to A, and so on, at regular or defined intervals (e.g., every predefined time domain). This ensures prolonged standstill conditions do not occur, reducing the likelihood of bearing damage.

In an example, auxiliary converter common to two or more drive trains or to two or more group of drive trains, comprises a single-output configuration. In such embodiments, the converter's output is electrically switched-for example, via a contactor, switching relay, or bus arrangement-between different drive trains (or drive train groups), ensuring that each drive train receives power for an active rotation interval at a designated time. This embodiment is particularly suitable for sequential operation, where one drive train or group is powered at any given moment.

In other examples, the auxiliary converter common to two or more drive trains or to two or more group of drive trains, may be an auxiliary converter provided with a common DC link and multiple inverter legs, enabling simultaneous or partially concurrent operation of multiple drive trains. Each inverter leg can drive a respective rotatable element/s at an adjustable frequency, voltage, or current. This allows partial overlap between active rotation intervals across different drive trains if it is deemed advantageous, for instance to stagger rotation schedules while still allowing some concurrency. This may allow to control simultaneously subgroups among groups, for example assigning only one auxiliary converter to each group. In addition, it may be more advantageous electrically switching for reliability reasons.

Thus, in some embodiments, there is a further subgrouping among groups, wherein the auxiliary converter (or power management system) of each group is configured to rotate the drive trains of each subgroup at at least partially distinct rotation intervals.

Since the present disclosure permits even the use of exclusively one auxiliary converter (albeit optionally with specialized output stages) for all drive trains or per each group of drive trains, it reduces costs and complexity relative to conventional multi-converter solutions. Hence, the solutions herein presented ensures a treatment of multiple bearing system in multiple drive trains during transport and/or storage with minimal additional hardware, power demand and thus costs.

In certain embodiments, the power management system may be configured to vary the final stop position of each drive train's rotatable element/s after an active rotation interval. This can be achieved through a random function algorithm (e.g., pseudo-random number generation in the control unit) or through deterministic logic (e.g., incrementing the stop position by a fixed offset each time). By ensuring the rotatable element/s comes to rest at a different angular position, potential bearing brinelling or uneven load distribution is further minimized.

In each of these embodiments, the control unit may employ a variety of scheduling or control strategies, such as:
- sequential rotation of each drive train, for example, in a prescribed order,
- a partial overlap with a limited concurrency period,
- group-based scheduling, wherein multiple drive trains among a group are simultaneously powered while other groups remain in standstill,
- sensor-based or random algorithms to determine rotation times and stop positions.

More in particular, the control unit may employ a control function utilizing parameters such as rotating time, position of the rotatable element/s, number of revolutions, or degrees of rotation. These parameters may serve as inputs (e.g., "rotate until 180° from the last stop position") or outputs (e.g., "log the final angle after each rotation"), thus guiding or monitoring the rotational sequences. For example, the system might stop rotation once the rotatable element/s completes a predetermined target angle or target number of revolutions.

It has been found that, on the one hand, a minimal rotation such a few revolutions per week, month or even a year (depending on the drive train conditions) may be enough to prevent standstill marks on the bearing systems. Typically, this involves a few degrees of rotation every few weeks or months and a limited number of revolutions per year.

However, on the other hand, the power to achieve such rotations for a plurality of drive trains during transport and/or storage can be considerable, specially under transport and/or storage conditions where power and equipment is limited. This is particularly important when turning speeds of at least 0.1 to 5 rpm are typically the most suitable for proper and efficient controlling the motor (or a generator functioning as a motor). This is particularly important when a wind turbine generator, which may not be designed to operate under these exceptional conditions, is used.

In other words, lower speeds, even though may be enough for preventing standstill marks in certain contexts, are often, in certain cases, impractical, in particular for effective control of some generators operating in motor mode. For a plurality of drive trains being transported or stored, achieving these rotations can result in significant peak power demands, necessitating the use of large transformers and multi-converters, one per drive train.

In addition, during transport or storage scenarios, especially in remote areas or on vessels, the availability of power is often limited, making high power consumption problematic. Availability of special transformers is also limited in such scenarios.

Additionally, equipping each drive train with its own dedicated auxiliary converter has proven to be both complex and expensive.

The arrangement of the present disclosure overcomes at least one of aforementioned drawbacks.

The embodiments and examples described above are not mutually exclusive and may be combined in any suitable combination to address specific requirements or preferences, unless explicitly stated otherwise.

While particularly described for wind turbine nacelles or generators, the embodiments herein described may be applied to any equipment requiring periodic rotation to protect bearings, including marine propulsion units, industrial machinery, etc.

In a second aspect, it is provided an arrangement for treating a plurality of bearing systems during storage and/or transport, the arrangement comprising:
a two or more groups of drive trains, namely: a first group and a second group, wherein at least a first group of the two or more groups comprises two or more drive trains, each drive train comprising:
   - a generator,
   - a rotatable element/s,
   - a bearing system configured to support the rotatable element/s,
   - a means for transmitting torque to rotate the rotatable element/s upon receiving a conditioned power signal,
a power management system at least including a first auxiliary converter associated with the first group and a second auxiliary converter associated with the second group,

wherein the first auxiliary converter is configured to:
   o receive electrical power from a power supply, and
   o provide the conditioned power signal (to the means for transmitting torque of the first group,
wherein the second auxiliary converter is configured to:
   o receive electrical power from a power supply, and
   o provide the conditioned power signal to the means for transmitting torque of the first group,
wherein the power management system is configured to orchestrate the delivery of the power signals among the two or more groups.

In some embodiments, the power management system may be configured to orchestrate the delivery of the power signal in at least partially distinct time intervals, such that each group, has at least one active rotation interval that differ from the active rotation interval(s) of the other group.

This second aspect constitutes an alternative arrangement that preserves the same inventive concept but differs in structural and operational configuration. Depending on the context or of the embodiments of the first aspect, the arrangement of the present disclosure may necessitate distinct formulations to preserve the scope.

For illustration, consider an arrangement with three drive trains distributed across two groups- one drive train in the first group and two in the second group. In this scenario, the two or more drive trains described in the first aspect may be interpreted in different ways: they could be interpreted as arrange in separate groups, meaning they do not share the same auxiliary converter, or they could be interpreted as arranged within the same group, in which case they would not exhibit at least partially distinct rotational behavior. This is because, under the second aspect, each group may have its rotatable elements rotating in synchrony with other drive trains within the group. Therefore, the second aspect accounts for this potential variation, which cannot be captured within the same operational framework as was described for the first aspect.

All other embodiments of the arrangement according to the first aspect may be combined with, and become readily apparent in light of, the second aspect.

In a third aspect, the disclosure is related to a vessel for treating a plurality third bearing systems of a plurality of drive trains being transported therein. More specifically, the vessel comprises the arrangement according to any one of the examples or embodiments of the first or the second aspect.

The vessel may further include a deck for supporting the plurality of drive trains and means for securing each drive train to prevent movement of the stationary/supporting components of the drive train along the deck during transport.

In other words, the vessel is equipped with means to securely accommodate the drive trains while providing controlled rotation of their rotatable element/s, thereby preventing damage or standstill marks during storage and transport.

The vessel may further comprise a power generation unit and/or batteries configured to provide a power supply. The power generation unit may include the vessel's propulsion engine, such as a diesel engine, a steam turbine, or a hydrogen-based power generation system.

The power supply may be managed by the power management system as disclosed in any one of the embodiments of the first or second aspect of the present disclosure.

In one embodiment, the vessel may include a switching system configured to selectively direct power to each drive train or to groups of drive trains. This switching system, in conjunction with or integrated in the power management system, enables independent power supply to each drive train or group of drive trains. In particular, the switching system may be controlled by a control unit integrated with or associated with the power management system as described in more detail in the first and/or second aspect.

The embodiments and examples described in relation to the first and/or second aspect, namely, the arrangement/s, can generally be combined with those of the third aspect, namely, the vessel including any embodiment of the arrangement/s. Such combinations would be readily apparent to a person skilled in the art, directly derivable, and enabling the implementation of features or functionalities described for the arrangement within the context of the vessel, and vice versa, unless explicitly stated otherwise.

According to a fourth aspect, it is provided a storage facility comprising the arrangement according to any one of the aforementioned examples of the first or second aspect

The storage facility according to the disclosure may be located in open or sheltered bays, quaysides, or laydown areas designed for storing large wind turbine drive trains and may be equipped with storage racks or platforms to hold the drive trains in a stationary position during storage, for example, waiting for transportation.

In an example, the storage facility may further include storage racks or platforms configured to hold the drive trains in a stationary position. These racks or platforms may be designed to securely accommodate the drive trains, preventing movement during storage while allowing rotatory parts (e.g. the rotatable element/s/s) of the drive train to rotate if a torque is applied.

In an example, a switching system may also be provided in the storage facility, comprising a plurality of switching units. Each switching unit may be associated with a single drive train or a group of drive trains, allowing independent power supply to each drive train or group. The switching system may operate in conjunction with the power management system and may be controlled by the control unit.

A firth aspect of the disclosure relates to a method for treating a plurality of bearing systems in wind turbine drive trains during storage and/or transport.

The method may involve orchestrating the conditioned power signal, to the a means for transmitting torque, such that each drive train and/or a group of drive trains has at least one active rotation interval that is at least partially distinct from the active rotation interval(s) of the other drive train(s) and/or another group of drive trains (2).

In some embodiments, power is sequentially provided to the a means for transmitting torque (e.g. rotary drive system) to rotate the rotatable element/s of each drive train or of two or more groups of drive trains. This sequential operation enables the rotatable element/s of the drive trains or groups of drive trains to rotate at staggered intervals, minimizing peak power demands and avoiding the need for oversized transformers or power supplies. In addition, it allows a single shared auxiliary converter to be utilized for all drive train units, or for all groups of drive train units arranged in two or more groups.

In an embodiment, the a means for transmitting torque (e.g. the rotatory drive system) may comprise the generator of each drive train. In this example, the method includes controlling the power supply to each generator, enabling it to deliver a driving torque that causes the rotatable element/s to rotate. This allows the generator to operate as a motor, leveraging existing components for efficient operation. As a further advantage, with this arrangement and method now only a single auxiliary converter may be needed.

In some embodiments, the two or more drive trains may be organized into one or more groups of drive trains. Each group can then be treated as a scheduling unit for receiving power signals in at least partially distinct intervals from other groups. In other words, as an example, the method may further comprise arranging or obtaining (e.g. by the control unit) a group of drive trains being transported or stored, in such a way that the generators corresponding to each group of drive trains receive a power signal at at least partially different time intervals, in particular in a sequential manner.

In an example, the method may include orchestrating the power supply to two or more groups of generators, with each group comprising a plurality of generators. The method may further comprise delivering power to the generators in each group at at least partially distinct rotating time intervals, ensuring that the rotatable component of one group is rotated at a time. This approach further optimizes power usage and simplifies system design (e.g. by using a single auxiliary converter) when dealing with a number of drive trains.

In an example, the two or more drive trains are subdivided into two or more groups, and the power management system may be configured to control the power signal so that each group of drive trains has at least one group-level active rotation interval that is at least partially distinct from the group-level active rotation interval(s) of the other groups,

In an example, the method comprises:
supplying, in particular by an auxiliary converter, a power signal to the a means for transmitting torque of a first drive train or a first group of drive trains during a first time interval, in particular adjusting one or more characteristics of a conditioned power signal;
switching or scheduling, in particular by a control unit and/or a switching system, a power stream distribution from the first drive train or group of drive trains to a second drive train (2) or a second group of drive trains,
supplying, in particular by the auxiliary converter, a second conditioned power signal to the a means for transmitting torque of the second drive train or the second group of drive trains during a second time interval that is at least partially distinct from the first time interval.

Optionally, the method may further comprise monitoring, by the control unit, the time intervals for supplying the power stream to each drive train or group of drive trains.

Similarly, in a further step, the method may further involve restarting the sequential rotation process after completing the rotation of all drive trains or groups, ensuring all rotary elements are periodically rotated.

The method described herein is applicable to the arrangement of the first aspect as previously presented, the vessel of the second aspect, and the storage facility of the third aspect. It is fully compatible with the features and embodiments of all previous aspects, encompassing the process steps of the systems and equipment's therein described.

### BRIEF DESCRIPTION OF THE DRAWINGS

Embodiments of the invention are now described, by way of example only, with reference to the accompanying drawings, of which:
- Figure 1: schematically illustrates an arrangement according to an example.
- Figure 2: schematically illustrates a vessel comprising an arrangement according to an example; and
- Figure 3: schematically illustrates a vessel comprising an arrangement according to another example,
- Figures 4: schematically illustrates a method depicted by way of example by a flow chart representing examples of the steps executed.

The illustration in the drawings is in schematic form. It is noted that in different figures, similar or identical elements may be provided with the same reference signs.

### DESCRIPTION OF THE DRAWINGS

In the diagrams, like numbers refer to like objects throughout. Objects in the diagrams are not necessarily drawn to scale.

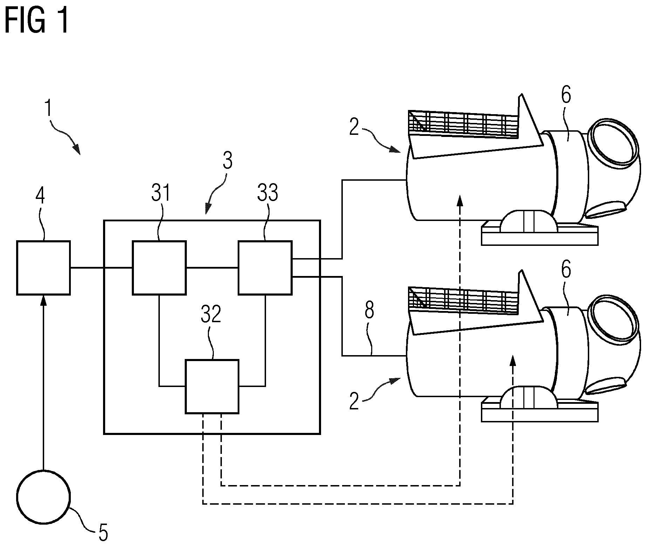

Referring to Figure 1, there is shown an arrangement (1) for treating a two or more drive trains (2) during storage and/or transport. In the illustrated example, two drive trains (2) are depicted by way of wind turbine nacelles (containing the drive trains (2)), each drive train (2) comprising at least a generator (6) and a bearing system (not shown) supporting at least one rotatable element/s (for instance, the main shaft and/or the rotor of the generator, not shown).

Each drive train (2) is operatively connected to a shared power management system (3).

As shown, this power management system (3) can include multiple functional components, described below.

An auxiliary converter (31), represented by one of the blocks within the central rectangle in Figure 1, is responsible for adjusting the power signal-for example, regulating voltage, current, or frequency-t o rotate each generator (2).

A control unit (32), shown in another block of Figure 1, supervises and sequences the power signals (8) sent to each drive train (2). This control unit (32) may be implemented via a programmable controller, microprocessor, or other logic device capable of switching or scheduling power according to desired schedules or control functions (e.g., time intervals, random algorithms, or sensor feedback).

In another embodiment, the control unit (32) may control a switching system (33), optionally, for example instead of scheduling, or in dependance of the type of auxiliary converter (31). The switching system may comprise contactors, switching relays and/or bus arrangement (not shown).

A power supply (4) supplies electrical energy (e.g. a power signal) to the auxiliary converter (31). That energy is subsequently directed toward the drive trains (2) in a controlled manner. The solid lines in the figure depict power signals (8) carrying electrical power to each drive train (2), while the dashed lines illustrate control or feedback signals-for instance, sensor data about the rotatable element/s's position or speed, or commands from the control unit (32).

By virtue of the power management system (3), each generator can be driven at at least partially distinct time intervals, meaning the rotatable element/s of the drive trains (2) may be rotated, for example, sequentially. As a result, bearing systems are periodically rotated, thereby preventing brinelling or uneven loading during extended storage or transport.

In some embodiments, the control unit (32) may apply cyclical, periodic, or even random rotation commands, so that each drive train (2) experiences a unique or varied stop position over time.

Although the figure depicts two drive trains (2) in a wind turbine context, the invention is not limited to wind energy applications or to exactly two turbines. More drive trains (2) or different machine types (e.g., marine propulsion units, industrial generators, etc.) can similarly benefit from this power management (3). The schematic nature of Figure (1) is intended to highlight the functional relationship between the auxiliary converter (31), the control unit (32), and each drive train (2), rather than to limit the invention to a specific mechanical layout or architectural detail.

Thus, Figure (1) demonstrates how the arrangement enables effective distribution of power signals from a shared converter system to multiple drive trains (2) so that each can be periodically rotated and protected from bearing damage like standstill marks and false brinelling. The arrangement reduces the need for multiple auxiliary converters and reduces power and transformer size.

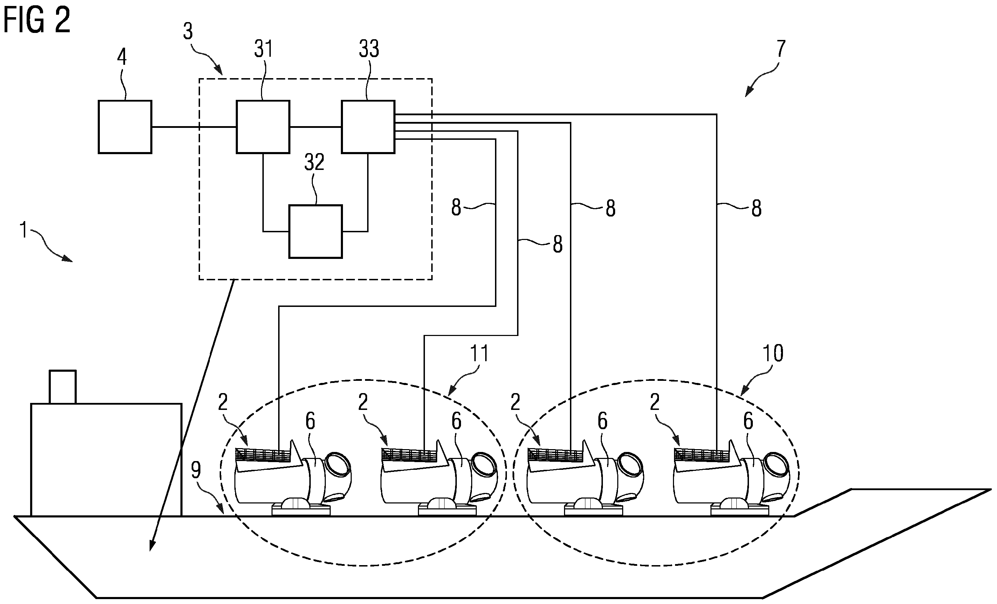

Turning now to Figure 2, an exemplary transport scenario in accordance with one embodiment of the invention is illustrated. A series of drive trains (2)-represented as wind turbine nacelles-are placed on the deck (9) of a vessel (7). Each drive train (2) includes a generator (6) and one or more bearing systems supporting a rotatable element/s (e.g., the generator rotor or main shaft, not shown).

Schematically positioned in a dashed region above the deck (9) is depicted in schematic form a shared power management system (3), which may include:
- an auxiliary converter (31) for generating or regulating the power signals used to rotate each drive train, and/or
- a control unit (32) configured to switch or schedule power delivery among the multiple drive trains, and/or
- a switching system (33), optionally, for example instead of scheduling, or in dependance of the type of auxiliary converter.

As shown in Figure 2, a power supply (4) supplies electrical energy to the power management system (3). In this embodiment, the arrangement lev-erages the concept of grouping drive trains (2) to streamline rotation scheduling. In particular, in this example the drive trains are grouped in two groups (10,11), both groups (10,11) supplied with a single auxiliary converter (31).

Specifically, the control unit (32) can be programmed to define two or more groups (10,11) of drive trains-for example, a first group comprising the forward nacelles on the vessel's deck, and a second group comprising the rearward nacelles.

As shown in the example of Figure 2, a switching system (33) is depicted as forming part of the power management system (3. The switching system (33) may be configured to selectively direct a power signal to each group (10,11) of drive train (2), the switching system (33) being configured to enable selective operation of the respective group (10,11).

The switching system may comprise contactors, switching relays and/or bus arrangement, and/or other means, configured to achieve the aforementioned functionality.

By grouping drive trains (2), the power management system (3) can selectively energize each group (10,11) at distinct or partially overlapping time intervals, rather than driving every single nacelle in isolation or all simultaneously. For instance, the system might power the first group (10) during an initial time interval to rotate their rotatable element/s, while the second group remains in standstill conditions (not rotated). After completing or partially overlapping that interval, the system switches to energize the second group.

In some embodiments, drive trains (2) within the same group (10,11) can share a substantially identical active rotation period, which is useful if they are positioned similarly, and/or are the same generator model with the same frequency and power requirements for its controlled thereof or require synchronous rotation for certain logistical reasons. Meanwhile, between groups, the rotation schedules remain at least partially offset, preventing all drive trains from running concurrently.

In other embodiments, each group has further subgroups of drive trains, wherein the subgroups are rotated (by the orchestrating of power signals), at at least partially different rotational intervals.

This group-based approach helps reduce hardware requirements (since a single auxiliary converter can handle multiple drive trains at staggered times) and simplifies control (because it can cycle through groups rather than controlling every nacelle's schedule individually). Moreover, the control unit can implement a random or cyclical rotation pattern at the group level, varying stop positions and preventing bearings from resting in a single orientation for too long-thus reducing the risk of brinelling or uneven wear during prolonged transport.

Although Figure 2 depicts the transport of wind turbine nacelles by a vessel, the same principle applies to any setting in which multiple machines are stored or transferred. Subdividing drive trains into groups managed by a common power management system (3) optimizes both power usage and equipment needed, ensuring each bearing system receives periodic rotation in accordance with the user's logistical requirements or maintenance strategies.

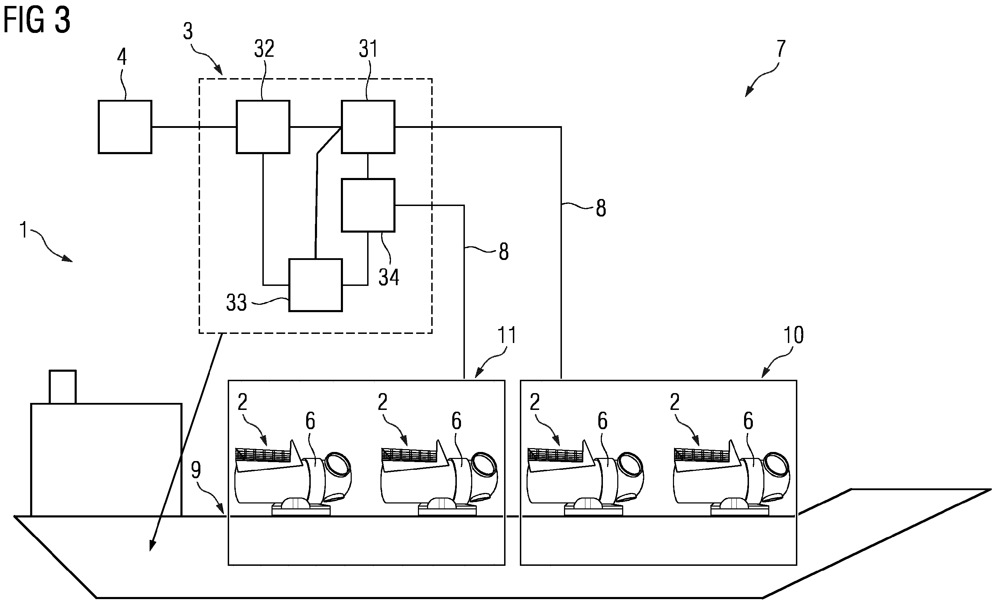

Referring now to Figure 3, an exemplary transport scenario in accordance with one embodiment of the invention is illustrated. A series of two groups (10,11) comprising two drive trains (2) each-represented as wind turbine nacelles-are placed on the deck (9) of a vessel (7). Each drive train (2) includes a generator (6) and one or more bearing systems supporting a rotatable element/s (e.g., the generator rotor or main shaft, not shown).

Schematically positioned in a dashed region above the deck (9) is depicted in schematic form a shared power management system (3), which may include:
- an auxiliary converter (31) for generating or regulating the power signals used to rotate each drive train of the first group (10), and/or
- a control unit (32) configured to switch or schedule power delivery among the multiple drive trains, and/or
- a switching system (33), optionally, for example instead of scheduling, or in dependance of the type of auxiliary converter.
- a second auxiliary converter (34) for generating or regulating the power signals used to rotate each drive train of the first group (11),,

As shown in Figure 3, a power supply (4) supplies electrical energy to the power management system (3). In this embodiment, the arrangement lev-erages the concept of grouping drive trains (2) to streamline rotation scheduling. In particular, in this example the drive trains are grouped in two groups (10,11), each group (10,11) comprising its own auxiliary converter (10,11).

Specifically, the control unit (32) can be programmed to define two or more groups (10,11) of drive trains-for example, the first group (10) comprising the forward nacelles on the vessel's (7) deck (9), and a second group (11) comprising the rearward nacelles.

As shown in the example of Figure 3, a switching system (33) is depicted as forming part of the power management system (3). The switching system (33) may be configured to selectively direct a power signal to each group (10,11) of drive train (2), the switching system (33) being configured to enable selective operation of the respective group (10,11).

The switching system may comprise contactors, switching relays and/or bus arrangement, and/or other means, configured to achieve the aforementioned functionality.

By grouping drive trains (2), the power management system (3) can selectively energize each group (10,11) at distinct or partially overlapping time intervals, rather than driving every single nacelle in isolation or all simultaneously. For instance, the system might power the first group (10) by a first auxiliary converter (31) during an initial time interval to rotate their rotatable element/s, while the second group (11) remains in standstill conditions (not rotated). Partially simultaneous (overlapping) can occur if both auxiliary converters are supplied with a power signal at partially overlapping times, also reducing energy consumption and allowing for a precise controlling of the arrangement (1).

In some embodiments, drive trains (2) within the same group (10,11) can share a substantially identical active rotation period, which is useful if they are positioned similarly, and/or are the same generator model with the same frequency and power requirements for its controlled thereof or require synchronous rotation for certain logistical reasons. Meanwhile, between groups, the rotation schedules remain at least partially offset, preventing all drive trains from running concurrently. For example after completing a first time interval, the system switches, sequentially, to the second auxiliary converter (32) to energize the second group (11). Thus, in this embodiment, each auxiliary converter (30,31) works on the basis of the power orchestration by the power management system (e.g. a control unit), each providing a power signal to the drive trains (i.e. generators operating in motor mode) of the same group.

In other embodiments, each group has further subgroups of drive trains, wherein the subgroups are rotated (by the orchestrating of power signals), at at least partially different rotational intervals. For example each auxiliary converter may be configured to provide to the drive train of its group at partially different time intervals, or at completely different time intervals (sequentially).

This group-based approach helps reduce hardware requirements (since a single auxiliary converter can handle multiple drive trains) and simplifies control (because it can cycle through groups rather than controlling every nacelle's schedule individually).

Moreover, the control unit may implement a random or cyclical rotation pattern at the group level, varying stop positions and preventing bearings from resting in a single orientation for too long-thus reducing the risk of brinelling or uneven wear during prolonged transport.

Although Figure 3 depicts the transport of wind turbine nacelles by a vessel, the same principle applies to any setting in which multiple machines are stored or transferred. Subdividing drive trains into groups managed by a common power management system (3) optimizes both power usage and equipment needed, ensuring each bearing system receives periodic rotation in accordance with the user's logistical requirements or maintenance strategies.

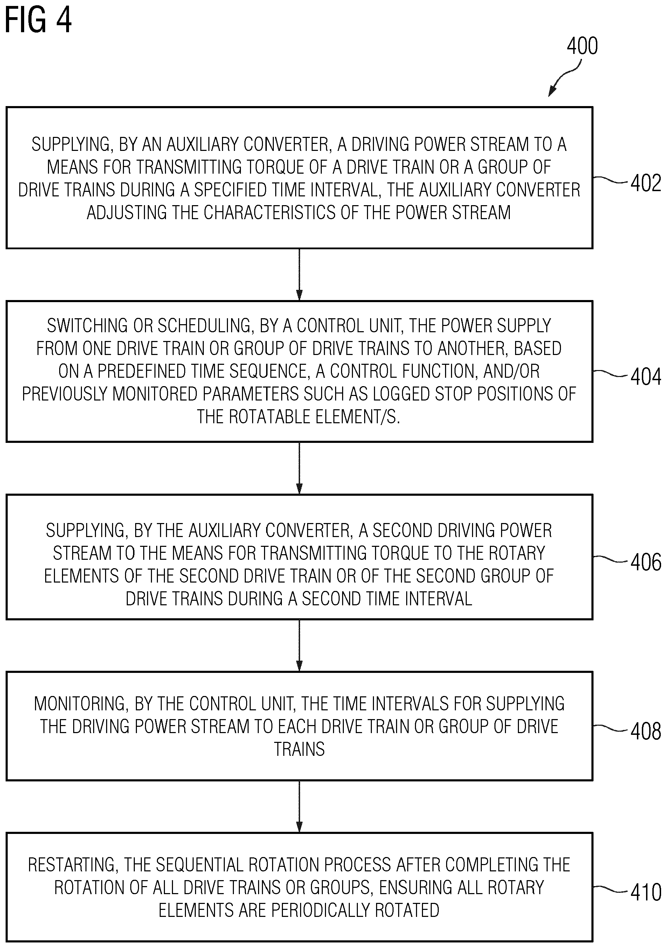

With reference to Figure 4, a method (400) for rotating a plurality of drive trains (2) or groups (10, 11) of drive trains during storage and/or transport according to an embodiment of the invention is illustrated. The method (400) ensures periodic rotation of rotatable element/s (e.g., shafts or generator rotors) to protect bearing systems from damage such as brinelling or uneven wear.

Below is a step-by-step description of the method (400) of depicted as an example in Figure 4.

In step (402), an auxiliary converter delivers a driving power stream to a means for transmitting torque (or rotary drive system) associated with a drive train or a group of drive trains. The power stream characteristics (such as voltage, frequency, or current) may be adjusted by the auxiliary converter to suit the particular requirements of the drive train(s). This step initiates the rotation of the rotatable element/s(s) during a specified time interval, providing the torque needed to begin or sustain rotation.

In step (404), a control unit reassigns the power supply from one drive train (or group) to another based on a predefined time sequence, a control function, or previously monitored parameters (such as logged stop positions of the rotatable element/s). By switching power in this manner, using the switching system, the method ensures that not all drive trains run simultaneously. Instead, each drive train (or group) is activated at distinct or partially overlapping intervals, reducing total power demand and allowing flexible rotation schedules.

In step (406), following the switch, the auxiliary converter provides a second driving power stream to the a means for transmitting torque the second drive train (or the second group of drive trains). This occurs during a subsequent time interval, which can immediately follow the first interval or partially overlap it, depending on how the control unit is programmed. The goal is to rotate each drive train (or group) in turn-or in overlapping phases-so that all rotatable element/s eventually receive appropriate rotation over time.

In step (408), the control unit monitors the time intervals for supplying power to each drive train or group. It may track how long each drive train has been active, the position of each rotatable element/s, and/or the number of rotations completed. This monitoring step enables the control unit to manage the overall schedule, detect if a drive train is approaching its target stop position, or verify that each bearing system has been rotated sufficiently.

In step (410), once all drive trains or groups have been rotated according to the predefined or adaptive schedule, the sequential rotation process is restarted to ensure periodic rotation continues. The control unit may cycle back to step (402), or, if desired, it can dynamically adjust intervals, stop positions, or other parameters (e.g., via a random or cyclical algorithm). Thus, the method (400) provides an ongoing rotation routine that prevents prolonged idle conditions and extends bearing life.

Overall, the procedure illustrated in Figure 3 accommodates a wide variety of scheduling strategies, from strictly sequential intervals to partially overlapping or group-based rotations. By using a shared auxiliary converter and a control unit capable of switching power streams intelligently, the method (400) effectively lowers hardware complexity, reduces total power consumption, and protects the bearing systems of multiple drive trains during storage or transport.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Arrangement (1) for treating a plurality of bearing systems during storage and/or transport, the arrangement comprising:
a two or more drive trains (2), each drive train (2) comprising:
- a generator (6),
- a rotatable element/s,
- a bearing system configured to support the rotatable element/s,
- a means for transmitting torque to rotate the rotatable element/s upon receiving a power signal (8),
a power management system (3) at least including one auxiliary converter (31), wherein the one auxiliary converter (31) is configured to:
o receive electrical power from a power supply (4), and
o provide the power signal (8) to the means for transmitting torque of the two or more drive trains (2).
wherein the power management system (3) is configured to orchestrate the delivery of the power signals (8) to the means for transmitting torque of the two or more drive trains (2).

2. The arrangement of claim 1, wherein the power management system (2) is configured to orchestrate the delivery of the power signal (8) in at least partially distinct time intervals, such that each drive train (2), has at least one active rotation interval that differ from the active rotation interval(s) of the other drive train (2).

3. The arrangement (1) of claim 1 or 2, wherein the a means for transmitting torque of each drive train (2), receive the power signal (8) in a sequential manner, thereby rotating the rotatable element/s of the drive trains (2) at different time intervals.

4. The arrangement (1) of any one of a 1 to 3, further comprising two or more groups (10,11) of drive trains, each group comprising at least one drive train (2), wherein the two or more drive trains (2) are subdivided in a common group, each group (10,11) having an auxiliary converter (31), wherein the power management system (3) is configured to orchestrate the power signal (8) among the two or more groups (10,11).

5. The arrangement (1) of claim 4, wherein the power management system (3) is configured to orchestrate the power signal (8) so that each group (10,11) of drive trains (2) has at least one group-level active rotation interval that is at least partially distinct from the group-level active rotation interval(s) of the other groups (10, 11).

6. The arrangement of any one of claims 1 to 5, wherein the a means for transmitting torque is the generator (6) of each drive trains (2) operating in a motor mode, receiving the power signal from the one auxiliary converter (31), to transmit a driving torque.

7. The Arrangement (1) of any one of claims 1 to 6, wherein the power management system (3), in particular through a control unit (32), is configured to vary a final stop position of the rotatable element/s of each drive train (2) or each group (10, 11) of drive trains (2) at each active rotation interval, in particular by implementing a random function algorithm.

8. The arrangement of any one of claims 1 to 7, wherein the power management system (3) is configured to monitor at least one operational parameter selected from:
- final stop position of the rotatable element/s,
- total rotating time,
- number of revolutions or degrees of rotation,
wherein the power management system (3) is configured to adjusts active rotation intervals based on said parameters.

9. The arrangement of any one of claims 1 to 8, further comprising a transformer (5) connected the power management system (3), in particular said transformer (5) configured to step up voltage from approximately 400V to 690V or step-down voltage from approximately 10.000 V to 690 V or 400 V.

10. The arrangement of any one of claims 1 to 9, further comprising a switching system (33) and/or a control unit (32), configured to control the delivery of the power signal (8) to the means for transmitting torque through scheduling, switching, and/or other control means.

11. The arrangement of any one of claims 1 to 10, further comprising a switching system (33) configured to selectively direct a power signal to each drive train (2), the switching system (33) being configured to enable selective operation of the respective drive train, wherein the switching system (33) is operable in conjunction with the power management system (3) or forms part of the power management system (3), and in particular is controlled by a control unit (32) integrated with or communicatively linked to the power management system (3).

12. A vessel (7) for transporting a plurality of drive trains (2), the vessel (7) comprising:
- -a deck (9) for supporting the plurality of drive trains (2),
- means for securing each drive train (2) to prevent movement of the drive train along the deck (9) during transport,
- a power generation unit and/or batteries configured to deliver a power supply (4), and
- the arrangement (1) according to any one of claims 1 to 11.

13. A storage facility for storing a plurality of wind turbine drive trains (5) in a designated place such as sheltered bays, quaysides, or laydown areas, the storage facility comprising:
storage racks or platforms configured to hold the drive trains (2) in a stationary position,
the arrangement according to any one of claims 1 to 11.

14. A method (400) of treating a plurality of bearing systems in a plurality of wind turbine drive trains (5) during storage and/or transport, each drive train (2) comprising:
- a generator (6),
- a rotatable element/s,
- a bearing system configured to support the rotatable element/s,
- a means for transmitting torque configured to rotate the rotatable element/s upon receiving a power signal,
wherein the method comprises orchestrating the power signal, to the a means for transmitting torque, such that each drive train (2) and/or a group of drive trains (2) has at least one active rotation interval that is at least partially distinct from the active rotation interval(s) of the other drive train(s) (2) and/or another group of drive trains (2).

15. The method of claim 14, wherein the orchestrating of the power signal comprises:
supplying, by an auxiliary converter (31), a power signal to the a means for transmitting torque of a first drive train (2) or a first group of drive trains (2) during a first time interval, in particular adjusting one or more characteristics of a power signal (8),
switching or scheduling, in particular by a control unit and/or a switching system, a power stream distribution from the first drive train (2) or group of drive trains (2) to a second drive train (2) or a second group of drive trains (2),
supplying, by the auxiliary converter (31), a second power signal to the a means for transmitting torque of the second drive train (2) or the second group of drive trains (2) during a second time interval that is at least partially distinct from the first time interval.
